# EUROPÄISCHE PATENTANMELDUNG

(11) **EP 2 777 869 A1**
(43) Veröffentlichungstag der Anmeldung: **17.09.2014**
(21) Anmeldenummer: 13158493.0
(22) Anmeldetag: 11.03.2013
(51) Int. Cl.: B23P 15/00, B23K 26/34, B23K 26/38, C23C 4/02, C23C 4/04, C23C 4/12, C23C 4/18, F04D 29/28

(54) **Verfahren zur Herstellung eines End-Bauteils**

(71) Anmelder: Sulzer Metco AG, 5610 Wohlen (CH)
(72) Erfinder: van Wijk, Jan-Jaap, 3252 CP Goedereede (NL); Cheaitany, Fouad, 8408 Winterthur (CH)
(74) Vertreter: Intellectual Property Services GmbH

(57) **Zusammenfassung**

Die Erfindung betrifft ein Verfahren zur Herstellung eines End-Bauteils, insbesondere einer Schaufel eines Rotors einer Strömungsmaschine.

Die Erfindung geht aus von einem Verfahren, bei welchem eine Schutzschicht als Verschleissschutz auf eine Auftragsfläche des End-Bauteils (11) aufgebracht.

Um eine gleichmässige Schutzschicht auf das End-Bauteil aufbringen zu können und gleichzeitig eine gewünschte Form des End-Bauteils exakt einhalten zu können, wird erfindungsgemäss vorgeschlagen, dass zunächst ein Zwischen-Bauteil (10) hergestellt wird, welches die Auftragsfläche (12) aufweist. Dann wird die Schutzschicht auf die Auftragsfläche (12) mittels Auftragschweissen aufgebracht. Anschliessend wird das Zwischen-Bauteil (10) zum End-Bauteil weiter bearbeitet. Das Zwischen-Bauteil (10) weist dabei eine vom End-Bauteil abweichende Grundform auf.

## Beschreibung

Die Erfindung betrifft ein Verfahren zur Herstellung eines End-Bauteils, insbesondere einer Schaufel eines Rotors einer Strömungsmaschine gemäß dem Oberbegriff des Anspruchs 1.

In der DE 10 2009 032 564 A1 wird ein Verfahren zur Herstellung eines End-Bauteils in Form einer Turbinenschaufel eines Rotors einer Strömungsmaschine beschrieben. Bei diesem Verfahren wird als Verschleissschutz mittels Laser-Auftragsschweissen eine Schutzschicht in Form einer Panzerung auf eine Auftragsfläche der Turbinenschaufel aufgebracht. Dazu werden beispielsweise Hartlegierungen der Firma Deloro Stellite Holdings Co. mit der Markenbezeichnung Stellite verwendet.

Bisherige Erfahrungen mit dem Aufbringen von derartigen Schutzschichten aus Hartlegierungen haben gezeigt, dass Schweiss- und Schrumpfprozesse interne Restspannungen verursachen, die die beschichteten Bauteile beträchtlich verformen können. Wenn Bauteile erst nach ihrer Montage an ihren endgültigen Einsatzort, beispielsweise auf einer Rotorscheibe eines Rotors einer Strömungsmaschine mit einer Hartlegierung beschichtet werden, besteht die Gefahr einer übermäßig starken Verformung der Bauteile. Außerdem kann das Aufbringen der Schutzschicht in diesem Fall meist nur manuell durchgeführt werden, da zumeist einige Stellen mit automatisierten Verfahren nur schwer erreichbar sind. Damit ergeben sich bei der Herstellung eines Rotors weitere Probleme, wie beispielsweise ein zusätzlicher Schleifaufwand zur Herstellung einer gleichmäßigen Schichtdicke und Oberflächenqualität, ein zeitaufwändiges Auswuchten des Rotors aufgrund größerer Gewichtsunterschiede zwischen den einzelnen Schaufeln und eine vergleichsweise geringe Verschleißfestigkeit der Schutzschicht durch die sich beim manuellen Auftragen zwangsweise ergebende ungleichmässige Ausbildung der Schutzschicht.

Demgegenüber ist es die Aufgabe der Erfindung, ein Verfahren zur Herstellung eines End-Bauteils vorzuschlagen, mittels welchem eine gleichmässige Schutzschicht auf das End-Bauteil aufgebracht werden kann und gleichzeitig eine gewünschte Form des End-Bauteils exakt eingehalten werden kann. Erfindungsgemäß wird diese Aufgabe mit einem Verfahren mit den Merkmalen des Anspruchs 1 gelöst.

Beim erfindungsgemässen Verfahren zur Herstellung eines End-Bauteils wird eine Schutzschicht auf eine Auftragsfläche aufgebracht. Dazu wird erfindungsgemäss zunächst ein Zwischen-Bauteil hergestellt, welches die Auftragsfläche aufweist. Dann wird die Schutzschicht auf die Auftragsfläche mittels Auftragschweissen aufgebracht. Anschliessend wird das Zwischen-Bauteil zum End-Bauteil weiter bearbeitet. Das Zwischen-Bauteil weist dabei eine vom End-Bauteil abweichende Grundform auf. Unter der Grundform ist in diesem Zusammenhang die Form des End-Bauteils ohne die Schutzschicht und ohne Änderungen der Form durch Feinbearbeitungen wie beispielsweise Schleifen oder Polieren zu verstehen.

Das End-Bauteil ist insbesondere als eine Schaufel eines Rotors einer Strömungsmaschine ausgeführt, wobei die Strömungsmaschine beispielsweise als ein Kompressor, eine Gas- oder Dampfturbine, ein Strahltriebwerk, eine Pumpe oder eine Wasserturbine ausgeführt sein kann.

Die Form des End-Bauteils wird in der Regel durch seine Funktion oder seinen Verwendungszweck, beispielsweise als Schaufel eines Rotors einer Strömungsmaschine bestimmt. Diese Form ist meist nicht optimal geeignet, um die oben genannten Probleme beim Aufbringen einer Schutzschicht zu vermeiden. Die Form des Zwischen-Bauteils kann dagegen so ausgelegt werden, dass das Aufbringen der Schutzschicht ohne Verformungen durchgeführt werden kann. Dazu kann das Zwischen-Bauteil massiver und damit stabiler als das End-Bauteil ausgeführt werden und insbesondere dafür ausgelegt werden, die beim Aufbringen der Schutzschicht auftretenden Kräfte ohne Verformungen aufzunehmen. Damit kann die Schutzschicht aufgebracht werden, ohne dass es zu Verformungen des Zwischen-Bauteils kommt.

Ausserdem ist es bei Anwendung des erfindungsgemässen Verfahrens möglich, die Schutzschicht automatisiert, also nicht von Hand aufzutragen. Dazu können an sich bekannte computergesteuerte Schweissanlagen eingesetzt werden. Damit kann zum einen die Schutzschicht in sehr kurzer Zeit und zum anderen mit einer sehr hohen Präzision und Reproduzierbarkeit aufgetragen werden. Dies ermöglicht einerseits ein kostengünstiges Auftragen der Schutzschicht und andererseits durch das gleichmässige Auftragen eine hoch wirksame Schutzschicht. Ausserdem können End-Bauteile reproduzierbar mit gleichen Eigenschaften hergestellt werden, was insbesondere bei der Herstellung von Schaufeln eines Rotors einer Strömungsmaschine vorteilhaft ist, da dann kein oder nur ein geringer Aufwand für ein Auswuchten des Rotors notwendig wird.

Die Schutzschicht wird insbesondere an hoch belasteten Stellen aufgebracht. Wenn das End-Bauteil als eine Schaufel eines Rotors einer Strömungsmaschine ausgeführt ist, werden beispielsweise eine Druckseite, ein Vorderrand und ein Teil einer Saugseite des Rotors beschichtet.

Nach dem Aufbringen der Beschichtung kann diese auch noch nachbearbeitet, beispielsweise geschliffen oder poliert werden.

Während oder nach jedem Arbeitsschritt können die Abmessungen des Zwischen- oder End-Bauteils geprüft und eventuelle Abweichungen korrigiert werden. So kann ein Einhalten von Soll-Abmessungen des End-Bauteils sicher gestellt werden.

Die Schutzschicht kann beispielsweise eine Dicke zwischen 0,5 und 2,5 mm aufweisen und zwar entweder direkt nach dem Auftragen oder nach Abschluss einer etwaigen Nachbearbeitung durch Schleifen oder Polieren.

In Ausgestaltung der Erfindung weist das End-Bauteil Seitenflächen auf, welche keine Auftragsflächen aufweisen. Das Zwischen-Bauteil ist zumindest teilweise im Bereich der Seitenflächen einstückig mit einem Fixierungselement verbunden. Das Fixierungselement stabilisiert das Zwischen-Bauteil und verhindert so ein Verziehen des Zwischen-Bauteils beim Aufbringen der Schutzschicht. Die Seitenflächen sind insbesondere hauptsächlich senkrecht zur Auftragsfläche angeordnet. Es ist auch möglich, dass alle Seitenflächen mit einem Fixierungselement verbunden sind. Ausserdem ist es möglich, dass nicht nur ein, sondern mehrere Fixierungselemente vorgesehen sind, die nicht direkt miteinander verbunden sind.

In Ausgestaltung der Erfindung weist das Fixierungselement ein Ausrichtelement auf. Mittels des Ausrichtelements kann das Zwischen-Bauteil für das Aufbringen der Schutzschicht exakt ausgerichtet bzw. positioniert werden. Damit wird ein besonders exaktes Aufbringen der Schutzschicht mittels eines automatisierten Verfahrens ermöglicht. Das Ausrichtelement kann beispielsweise als eine Nut ausgeführt sein.

In Ausgestaltung der Erfindung wird das Zwischen-Bauteil mittels eines Fräsverfahrens hergestellt. Das Zwischen-Bauteil kann beispielsweise aus einem massiven, geschmiedeten Block aus einem hochfesten Stahl mittels einer 5-achsigen CNC-Maschine herausgefräst werden. Dazu kann beispielsweise ein Stahl mit der Kurzbezeichnung S460N verwendet werden. Damit ist es möglich, ein sehr widerstandsfähiges Zwischen-Bauteil mit sehr hoher Genauigkeit herzustellen.

In Ausgestaltung der Erfindung wird die Schutzschicht mittels Laser-Auftragsschweissen auf die Auftragsfläche aufgebracht. Damit kann eine sehr gleichmässige, genau definierte und widerstandsfähige Schutzschicht erzielt werden. Es ist aber auch möglich, die Schutzschicht mittels Lichtbogen-Auftragsschweissen aufzubringen.

In Ausgestaltung der Erfindung wird die Schutzschicht mittels eines automatisierten Verfahrens zum Auftragsschweissen auf die Auftragsfläche aufgebracht. Damit kann wie oben bereits ausgeführt zum einen die Schutzschicht in sehr kurzer Zeit und zum anderen mit einer sehr hohen Präzision aufgetragen werden.

In Ausgestaltung der Erfindung besteht die Schutzschicht aus einer Legierung aus Kobalt, Chrom und Kohlenstoff, sowie wenigstens eines der Elemente Molybdän, Silizium, Wolfram, Nickel oder Eisen. Damit ist es möglich eine besonders widerstandsfähige Schutzschicht zu erreichen. Beispielsweise können Hartlegierungen der Firma Sulzer Metco AG mit der Markenbezeichnung MetcoClad verwendet werden. Insbesondere eignet sich die Legierung mit der Verkaufsbezeichnung MetcoClad 21. In diesem Fall enthält die Legierung 25,0 - 29,0 insbesondere 27,0 % Chrom, 0,2 - 0,3 insbesondere 0,25 % Kohlenstoff, 5,0 - 6,0 insbesondere 6,0 % Molybdän, 2,0 - 4,0 insbesondere 2,0 % Nickel, 1 % oder weniger, insbesondere 1 % Silizium, 3% oder weniger, insbesondere 2 % Eisen und als Rest Kobalt, sowie weniger als 1 % sonstige Materialien (jeweils auf das Gesamtgewicht bezogen).

In Ausgestaltung der Erfindung wird zur Herstellung des End-Bauteils aus dem Zwischen-Bauteil ein Laser-Schneidverfahren eingesetzt. Dazu wird insbesondere eine 3D Laserschneidanlage verwendet. Dies ermöglicht eine besonders einfache und kostengünstige Bearbeitung des Zwischen-Bauteils. In diesem Arbeitsschritt werden insbesondere die Seitenflächen des End-Bauteils herausgearbeitet, die anschliessend auch noch nachbearbeitet, beispielsweise geschliffen und/oder poliert werden können.

Das erfindungsgemässe Verfahren kann insbesondere Teil einer Herstellung eines Rotors einer Strömungsmaschine mit einem Schaft und mehreren Schaufeln sein. Dabei werden zunächst End-Bauteile in Form von Schaufeln mit dem erfindungsgemässen Verfahren hergestellt. Anschliessend werden die Schaufeln mit dem Schaft verbunden, insbesondere verschweisst. Damit lassen sich besonders widerstandsfähige Rotoren mit exakt eingehaltenen Vorgaben für die Abmessungen herstellen.

Der Schaft kann ebenfalls beschichtet werden, wobei dazu insbesondere ein anderes Beschichtungsverfahren und ein anderes Beschichtungsmaterial eingesetzt wird. Der Schaft kann insbesondere mittels Hochgeschwindigkeitsflammspritzen (abgekürzt HVOF: High-Velocity Oxygen Fuel) beschichtet werden. Das Beschichtungsmaterial kann insbesondere als eine Legierung mit 17 % Chrom, 11 % Molybdän, 3 % Silizium, 3 % Kupfer, 4 % Bor, 0,4 % Kohlenstoff und dem Rest Eisen (jeweils auf das Gesamtgewicht bezogen) ausgeführt sein.

Der Schaft des Rotors weist insbesondere eine Rotorscheibe auf, die insbesondere zumindest abschnittsweise eine kreisrunde Aussenkontur aufweist und senkrecht zu einer Axialrichtung des Rotors angeordnet ist. Die Schaufeln werden dann mit der Rotorscheibe verbunden und insbesondere zusätzlich auch mit dem Schaft des Rotors. Damit wird eine besonders stabile Verbindung der Schaufeln mit dem Rotor ermöglicht. Der Schaft und die Rotorscheibe sind dabei insbesondere einstückig aus einem einzigen Schmiedeteil hergestellt.

Der Rotor kann auch ein so genanntes Deckband aufweisen, das um Enden der Schaufeln verläuft, die nicht mit der Rotorscheibe verbunden sind. Die Schaufeln sind insbesondere mit dem Deckband verschweisst. Ausserdem weist das Deckband insbesondere auch eine Schutzschicht aus demselben Material wie die Schutzschicht der Schaufeln auf.

In Ausgestaltung der Erfindung wird der Rotor nach dem Anbringen der Schaufeln wärmebehandelt. Damit werden Restspannungen im Rotor abgebaut und der Rotor ist anschliessend besonders widerstandsfähig. Vor oder nach der Wärmebehandlung kann noch eine Endbearbeitung in Form von Schleifen oder Polieren erfolgen. Bei der Wärmebehandlung wird der Rotor beispielsweise für 1, 5 bis 2,5 Stunden auf 500 bis 600 °C erhitzt.

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind.

Dabei zeigen:
- Fig. 1: ein Zwischen-Bauteil in einer perspektivischen Darstellung,
- Fig. 2: das Zwischen-Bauteil in einer Sicht von oben,
- Fig. 3: das Zwischen-Bauteil in einer Sicht von unten,
- Fig. 4: das Zwischen-Bauteil in einer Sicht von hinten,
- Fig. 5: eine schematische Darstellung eines Schnitts durch ein End-Bauteil,
- Fig. 6: ein End-Bauteil in einer Sicht von oben und
- Fig. 7: ein Rotor einer Strömungsmaschine mit Schaufeln, die eine Schutzschicht aufweisen.

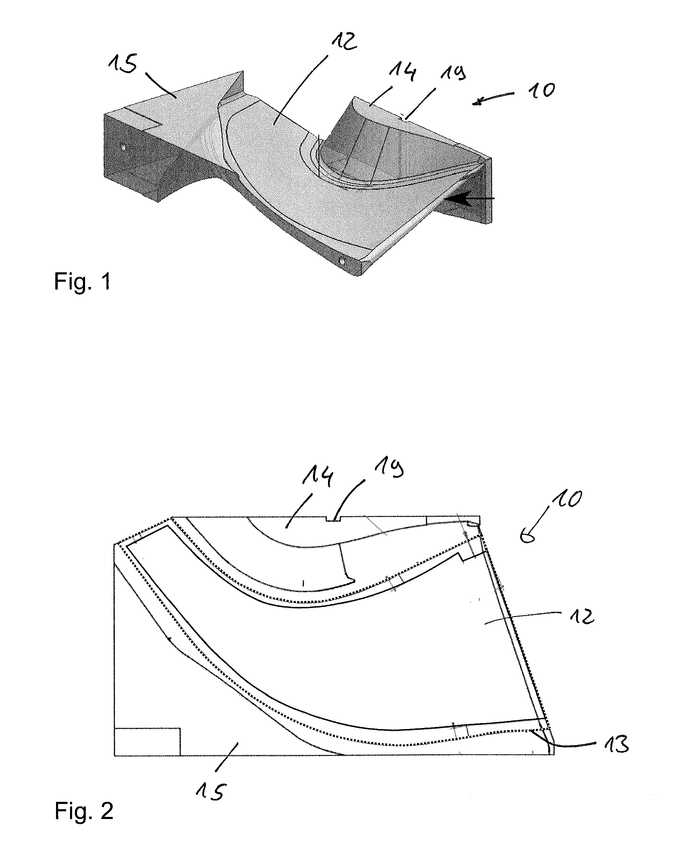

In Fig. 1, 2, 3 und 4 ist ein Zwischen-Bauteil 10 dargestellt, das aus einem massiven, geschmiedeten Block aus einem hochfesten Stahl mittels einer 5-achsigen CNC-Maschine herausgefräst wurde. Die Fräsbearbeitung erfolgte in mehreren Schritten, wobei zwischen den einzelnen Schritten die Abmessungen überprüft wurden.

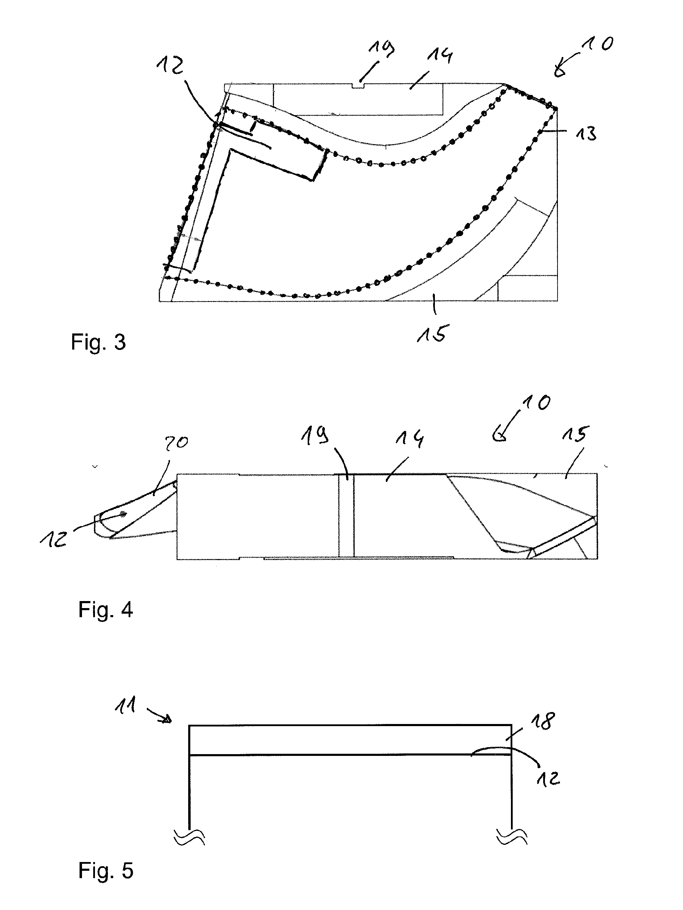

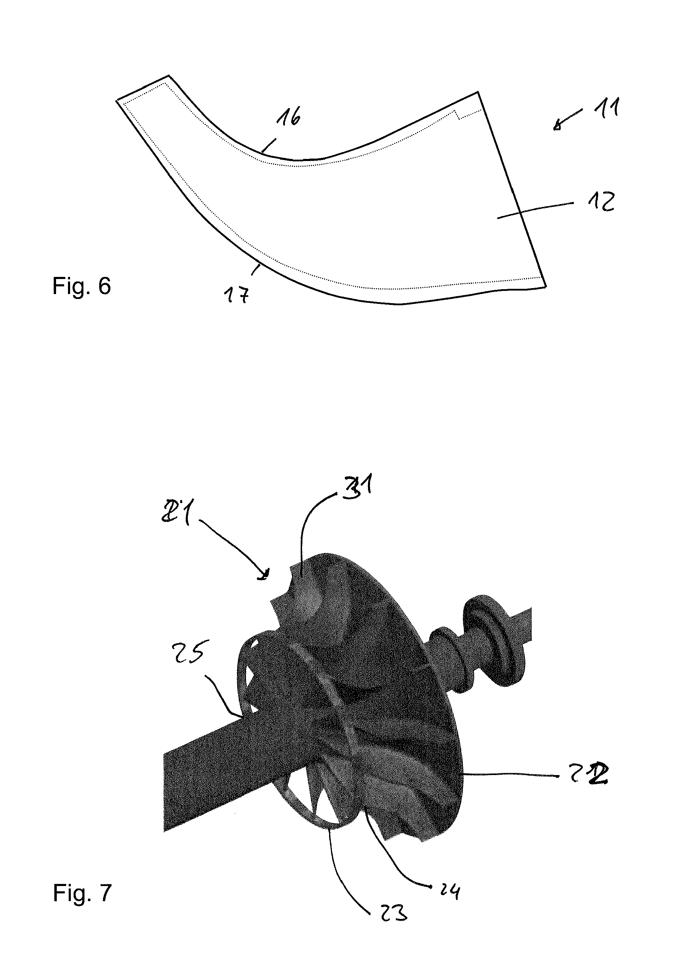

Das Zwischen-Bauteil 10 wird zu einem End-Bauteil 11 (siehe Fig. 6) in Form einer Schaufel eines Rotors eines Kompressors weiter bearbeitet. Das Zwischen-Bauteil 10 weist eine Auftragsfläche 12 auf, auf die eine Schutzschicht 18 (siehe Fig. 5) mittels Laser-Auftragsschweissen aufgebracht wird. Das Auftragen der Schutzschicht 18 erfolgt automatisiert mit einer nicht dargestellten computergesteuerten Laser-Auftragsschweissanlage. Die Schutzschicht weist dabei eine Dicke zwischen 0,5 und 2,5 mm auf.

Eine Grundform des End-Bauteils 11 ist in den Fig. 2 und 3 mit einer gepunkteten Linie 13 dargestellt. Wie aus den Fig. 2 und 3 ersichtlich, weicht die Grundform des End-Bauteils 11 deutlich von einer Grundform des Zwischen-Bauteils 10 ab. Das Zwischen-Bauteil 10 weist Fixierungselemente 14, 15 auf, die mit Seitenflächen 16, 17 (siehe Fig. 6) des End-Bauteils 11 einstückig verbunden sind. Darunter ist zu verstehen, dass sich die Seitenflächen 16, 17 ergeben, wenn das End-Bauteil 11 mittels einer 3D Laserschneidanlage aus dem Zwischen-Bauteil 10 herausgeschnitten wird. Die Seitenflächen 16, 17 weisen damit keine Auftragsfläche 12 auf.

Die Fixierungselemente 14, 15 stabilisieren das Zwischen-Bauteil 10 und verhindern so, dass sich das Zwischen-Bauteil 10 beim Aufbringen der Schutzschicht 18 auf die Auftragsfläche 12 mittels Laser-Auftragsschweissen verzieht. Die Schutzschicht 18 besteht aus einer Hartlegierung der Firma Deloro Stellite Holdings Co. mit der Markenbezeichnung Stellite und der Verkaufsbezeichnung Stellite alloy 21. Das Fixierungselement 14 weist ein Ausrichtelement 19 in Form einer Nut auf. Mittels des Ausrichtelements 19 wird das Zwischen-Element 10 beim Aufbringen der Schutzschicht 18 in einer genau definierten Position positioniert. Für das Aufbringen der Schutzschicht 18 wird das Zwischen-Bauteil 10 an den Fixierungselementen 14, 15 in der oben genannten Laser-Auftragsschweissanlage eingespannt.

Wie in der Fig. 2 und 6 dargestellt, füllt die Auftragsfläche 12 fast die vollständige Oberseite des End-Bauteils 11 aus. Gemäss Fig. 3 wird nur ein geringer Teil einer Unterseite des End-Bauteils beschichtet. Ausserdem wird gemäss Fig. 4 eine Vorderkante des End-Bauteils 11 mit einer Schutzschicht 18 versehen. Bei den beschichteten Bereichen des End-Bauteils 11 handelt es sich um die im Betrieb des Rotors besonders beanspruchten Bereiche des End-Bauteils 11.

Nach dem Aufbringen der Schutzschicht 18 auf die Auftragsfläche 12 des Zwischen-Bauteils 10 wird die Beschichtung zunächst poliert und anschliessend mittels einer nicht dargestellten 3D Laserschneidanlage das End-Bauteil 11 aus dem Zwischen-Bauteil 10 heraus geschnitten. Nach dem Herausschneiden werden die Seitenflächen 16 und 17 geschliffen.

Während und nach der Fertigung des End-Bauteils 11 wurde mittels 3D-Messungen die Abmessungen des End-Bauteils 11 erfasst und mit Sollgrössen verglichen. Falls die tatsächlichen Abmessungen von den Sollgrössen abweichen, kann eine Nachbearbeitung durchgeführt werden.

Nach der beschriebenen Herstellung und Kontrolle der einzelnen Schaufeln 31 für einen in Fig. 7 dargestellten Rotor 21 eines nicht dargestellten Kompressors, werden die einzelnen Schaufeln 31 an eine Rotorscheibe 22 eines Schafts 25 des Rotors 21 angeschweisst. Zusätzlich wird ein Deckband 23 montiert, das um Enden 24 der Schaufeln 31 verläuft, die nicht mit der Rotorscheibe 22 verbunden sind. Eine Stirnseite und ein Innendurchmesser des Deckbands 23 sind mit derselben Beschichtung wie die Schaufeln 31 versehen. Das Deckband 23 wird ebenfalls mit den Schaufeln 31 verschweisst.

Das Anschweissen der Schaufeln 31 an die Rotorscheibe 22 wird mit einem Prüfprotokoll begleitet. Eine nicht dargestellte Lehre mit vorgeschnittenen Nuten stellt eine korrekte Positionierung jeder einzelnen Schaufel 31 vor dem Schweissen sicher. Das Schweissen erfolgt unter kontrollierten Temperaturbedingungen, um die Eigenschaften und die Qualität der Schutzschicht auf den Schaufeln 31 und dem Deckband 22 nicht zu beeinträchtigen.

Nach Abschluss der Schweissarbeiten wird der gesamte Rotor 21 einer Wärmebehandlung unterzogen. Dabei wird der Rotor 21 für 1, 5 bis 2,5 Stunden auf 500 bis 600 °C erhitzt. Damit werden mögliche Restspannungen im Rotor 21 abgebaut.

Nach der Wärmebehandlung wird der Rotor 21 zerstörungsfrei inspiziert, womit mögliche Materialfehler infolge der Wärmebehandlung ausgeschlossen werden. Ausserdem werden eine letzte geometrische Prüfung und eine so genannte Schleuderprüfung durchgeführt, bei der der Rotor 21 mit einer so genannten Schleuderdrehzahl betrieben wird, die höher als seine so genannte Nenndrehzahl ist. Nach einem abschliessenden Auswuchten des Rotors 21 steht er für den Einbau in einen Kompressor bereit.

## Patentansprüche

1. Verfahren zur Herstellung eines End-Bauteils (11), bei welchem eine Schutzschicht (18) auf eine Auftragsfläche (12) aufgebracht wird, **dadurch gekennzeichnet, dass**
folgende Schritte ausgeführt werden:
- Herstellen eines Zwischen-Bauteils (10), welches die Auftragsfläche (12) aufweist,
- Aufbringen der Schutzschicht (18) auf die Auftragsfläche (12) mittels Auftragschweissen und
- Weiterbearbeiten des Zwischen-Bauteils (10) zum End-Bauteil (11)
wobei das Zwischen-Bauteil (10) eine vom End-Bauteil (11) abweichende Grundform aufweist.

2. Verfahren nach Anspruch 1,
**dadurch gekennzeichnet, dass**
das End-Bauteil (11) Seitenflächen (16, 17) aufweist, welche keine Auftragsfläche (12) aufweisen und das Zwischen-Bauteil (10) zumindest teilweise im Bereich der Seitenflächen (16, 17) einstückig mit einem Fixierungselement (14, 15) verbunden ist.

3. Verfahren nach Anspruch 2,
**dadurch gekennzeichnet, dass**
das Fixierungselement (14) ein Ausrichtelement (19) aufweist.

4. Verfahren nach Anspruch 1, 2 oder 3,
**dadurch gekennzeichnet, dass**
das End-Bauteil (11) als eine Schaufel (31) eines Rotors (21) einer Strömungsmaschine ausgeführt ist.

5. Verfahren nach einem der Ansprüche 1 bis 4,
**dadurch gekennzeichnet, dass**
das Zwischen-Bauteil (10) mittels eines Fräsverfahrens hergestellt wird.

6. Verfahren nach einem der Ansprüche 1 bis 5,
**dadurch gekennzeichnet, dass**
die Schutzschicht (18) mittels Laser-Auftragsschweissen auf die Auftragsfläche (12) aufgebracht wird.

7. Verfahren nach einem der Ansprüche 1 bis 6,
**dadurch gekennzeichnet, dass**
die Schutzschicht (18) mittels eines automatisierten Verfahrens zum Auftragsschweissen auf die Auftragsfläche (12) aufgebracht wird.

8. Verfahren nach einem der Ansprüche 1 bis 7,
**dadurch gekennzeichnet, dass**
die Schutzschicht (18) aus einer Legierung aus Kobalt, Chrom und Kohlenstoff, sowie wenigstens eines der Elemente Molybdän, Silizium, Wolfram, Nickel oder Eisen besteht.

9. Verfahren nach einem der Ansprüche 1 bis 8,
**dadurch gekennzeichnet, dass**
zur Herstellung des End-Bauteils (11) aus dem Zwischen-Bauteil (10) ein Laser-Schneidverfahren eingesetzt wird.

10. Verfahren zur Herstellung eines Rotors (21) einer Strömungsmaschine mit einem Schaft (25) und mehreren Schaufeln (31),
**dadurch gekennzeichnet, dass**
zunächst die Schaufeln (31) mittels eines Verfahrens nach den Ansprüchen 1 bis 9 hergestellt wird und anschliessend die Schaufeln (31) mit dem Schaft (25) verbunden werden.

11. Verfahren nach Anspruch 10,
**dadurch gekennzeichnet, dass**
der Schaft (25) des Rotors (21) eine Rotorscheibe (22) aufweist und die Schaufeln (31) mit der Rotorscheibe (22) verbunden werden.

12. Verfahren nach Anspruch 11,
**dadurch gekennzeichnet, dass**
der Rotor (21) ein Deckband (22) aufweist, das um Enden (24) der Schaufeln (31) verläuft, die nicht mit der Rotorscheibe (22) verbunden sind.

13. Verfahren nach Anspruch 10, 11 oder 12,
**dadurch gekennzeichnet, dass**
der Rotor (21) nach dem Anbringen der Schaufeln (31) wärmebehandelt wird.
